# EUROPEAN PATENT SPECIFICATION

(11) **EP 1 112 168 B1**
(45) Date of publication and mention of the grant of the patent: **17.07.2002**
(21) Application number: 99946319.3
(22) Date of filing: 13.09.1999
(51) Int. Cl.: B29C 63/34, F16L 55/165, C08J 3/24

(54) **METHOD OF LINING PIPES**
VERFAHREN ZUM INNENBESCHICHTEN VON ROHREN
PROCEDE DE REVETEMENT DE L'INTERIEUR DE TUYAUX

(30) Priority: 11.09.1998 GB 9819712
(43) Date of publication of application: 04.07.2001
(73) Proprietor: Advanced Engineering Solutions Ltd., Cramlington, Northumberland NE23 9WF (GB); Burley, Colin, Newcastle upon Tyne NE3 2QX (GB)
(72) Inventor: BURLEY, Colin, Newcastle upon Tyne NE3 2QX (GB); WRIGHT, Nigel, Swarland, Northumberland NE65 9JS (GB)
(74) Representative: Jones, Stephen Anthony
(86) International application number: GB9903024
(87) International publication number: WO0015411

(56) References cited:
- EP-A- 0 254 489
- WO-A-97/25567
- GB-A- 2 324 846
- DATABASE WPI Section Ch, Week 198114 Derwent Publications Ltd., London, GB; Class A17, AN 1981-24099D XP002126276 & JP 56 013127 A (SHOWA ELECTRIC WIRE CO LTD), 9 February 1981 (1981-02-09)

## Description

This invention relates to a method of lining existing or new pipelines.

Plastics pipe liners are a common material for refurbishing existing pipelines, for example cast iron gas and water distribution pipelines, to eliminate leakage and for lining new pipelines, for example offshore oil pipelines, to prevent corrosion.

For a number of years Medium Density Polyethylene (MDPE) pipe has been extensively used as a liner to refurbish buried water distribution mains. These liners are classified as 'independent liners' with the liner acting as a pipe within a pipe and being able to cope with 16 bar water pressures without any assistance from the original carrier pipe. In these applications the liner can be installed as either a loose fitting liner or a close fitting liner.

Loose fitting lining is the simplest and cheapest method of liner installation. The liners are extruded to a smaller diameter than the carrier pipe and are simply pulled in to the main. Since the loose liner is normally designed to have large clearances with the carrier pipe, pull- in loads are low, which enables long pull-in distances to be achieved. Problems associated with loose lining are, however, that the liner does not have the stability of a close fitting liner and the liner can severely reduce the flow area of the carrier pipe. It therefore follows that loose liners can only be specified where the loss of hydraulic capacity can be tolerated.

Independent liners can also be close fitting, having their outside diameter temporarily reduced so they can be easily pulled into the carrier pipe before recovering to the bore of the pipe. These methods include those known as "swagelining" and "rolldown" and they ensure the liner has the desired tight fit inside the pipe, thus maximising liner stability and pipeline flow area. The disadvantage of these methods of lining is associated with the large push/pull-in loads generated. For swagelining, for instance, the pipe bore and liner o.d. need to be closely toleranced to ensure a close fit and to minimise the pull-in loads. This restricts lining distances and the system is best suited to pipelines with long straight runs with the minimum amount of bends and internal protrusions.

The latest generation of liners combines the advantages of both loose and close fitting lining to reduce rehabilitation costs. The liners are installed with a folded geometrical shape which is the equivalent of loose lining. Once installed, the liner is pressurised to form a close fit within the pipe. However, the installation of a liner, most commonly of polyethylene (PE), into corroded cast iron mains can give problems in sizing the liner to match the bore. Often the liner has to be extruded to a non-standard outside diameter to match the bore of the main. This increases the cost of the liner and can lead to undersized liners or unsupported liners due to bore variations along the length of the pipe.

If the liner is oversized then a nib or fold is formed in the liner which can interfere with cleaning using pigging systems or cause premature failure of the liner due to high stress concentrations. However if the liner is undersized, the liner is unsupported and there is a significant chance that necking of the liner could occur or liner collapse caused by ingress of ground water with a high pressure head from the water table.

PE can only be hoop strained 8% - 10 % before the onset of necking at yield which makes it difficult to size the liner to give an exact fit. Also, if an existing PE liner is forced onto the wall of the pipe to obtain a good fit using a high hydraulic over pressure, the liner can creep away from the pipe wall which in turn can cause any branch or service connection to subsequently leak if the operating pressure is lower than the installation pressure.

There has now been devised a method of lining pipelines which overcomes or substantially mitigates the above-mentioned or other disadvantages of the prior art.

According to the present invention there is provided a method of lining pipes using a thermoplastic liner pipe incorporating a crosslinking agent, which method comprises deforming a round liner pipe into a geometrical shape having a substantially smaller overall dimension, inserting the deformed liner pipe into the existing pipe, reforming the liner pipe to a round shape, expanding the liner pipe onto the internal surface of the existing pipe, and crosslinking the liner pipe.

The method according to the invention is advantageous *inter alia* in that the deformed liner pipe may be deployed within the pipes without the problems hitherto encountered with liner sizing. Furthermore, after the deformed liner has been reformed to its round shape, expanded into engagement with the pipe inner wall and crosslinked it will not subsequently creep away from the wall.

The preferred material used for the liner is a crosslinkable polyolefin, most preferably crosslinkable polyethylene.

One preferred form of crosslinkable material comprises a polyolefin, eg a polyethylene or the like, to which vinyl silane groups are grafted. A process for producing such materials is described in detail in GB 1286460B ("the Silane Process"), the disclosure of which is incorporated herein by reference. Essentially the process involves reacting a polyolefin (e.g. polyethylene) with a silane containing at least one vinyl group and at least one hydrolysable organic radical.

Materials of the preferred kind can be crosslinked by exposure to moisture. Thus, following installation of the crosslinkable liner and expansion, the pipe can be crosslinked by passing water, water vapour or the pipeline product dosed with water down the lined pipe.

The speed of crosslinking will be determined by the effectiveness of the catalyst used in the silane process and the operating temperature of the pipeline.

Various methods of deforming the round liner pipe into a smaller overall shape may be used, and these will be apparent to those skilled in the art. In one method the liner pipe may be drawn over or through a suitably shaped former and thereby mechanically deformed. The liner pipe may be held in the deformed condition by the application of suitable ties or the like. Reforming of the deformed liner to its original round form may also be accomplished by means which are known *per se*, eg by the application of pressure to the pipe. Where ties are in place to hold the liner pipe in the deformed condition these may simply be broken by the pressure applied to the liner pipe in the reforming operation.

Various deformed shapes may be utilised. One particular type of deformation which may be specifically mentioned is deformation of the lining pipe to a C- or U-shaped cross-section.

A specific embodiment of the invention will now be described, by way of example only, with reference to the accompanying drawings, in which;
Figure 1 is an end view of a crosslinkable thermoplastic liner pipe as extruded;
Figure 2 shows the crosslinkable liner formed into geometrical shape with a smaller overall dimension;
Figure 3 shows the deformed crosslinkable liner inserted into a host pipe;
Figure 4 shows the crosslinkable liner re-formed to its original shape inside the host pipe; and
Figure 5 shows the crosslinkable liner expanded onto the bore of the host pipe.

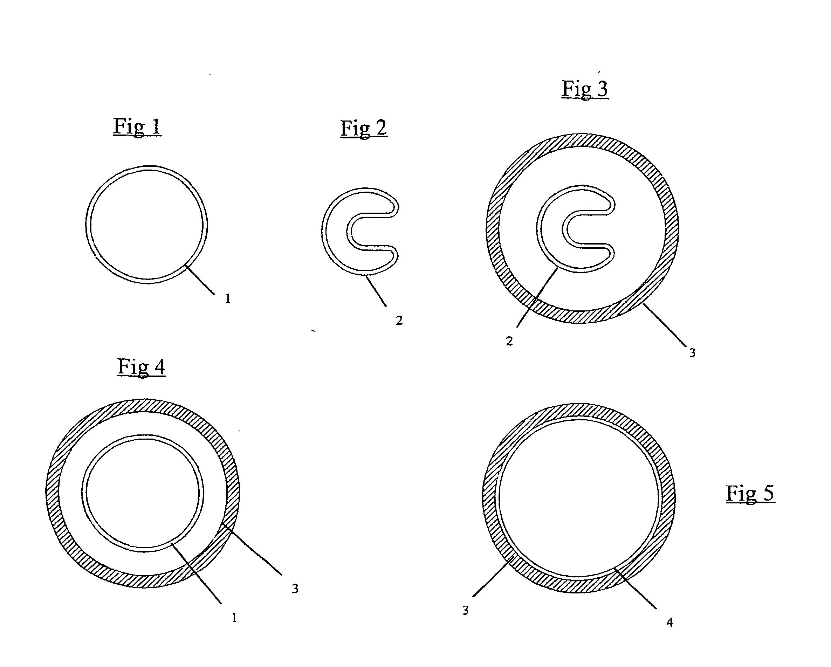

Referring to Figure 1, a liner pipe (1) is extruded in crosslinkable polyethylene formed by the silane process, to a conventional round shape. The diameter of the liner pipe (1) is somewhat less than the bore of a host pipe (3) which is to be lined. Prior to introduction of the liner pipe (1) into the host pipe (3) the liner pipe (1) is formed or folded into a geometrical shape of overall size significantly less than the original diameter - see Figure 2. Such a shape may be achieved by drawing the liner pipe (1) through a suitably shaped former and retaining the liner pipe (1) in that shape by the application of suitable ties (not shown) around the deformed liner pipe (1). The folded liner pipe (I) is then inserted into the host pipe (3), as shown in Figure 3.

After insertion, the liner pipe (1) is reformed into its original round shape and size, for example by the application of heat and/or pressure, inside the host pipe (3), as shown in Figure 4. Where ties have been applied to retain the liner pipe (I) in the deformed shape these may be designed with mechanical properties such that they simply break under the applied pressure. Finally, the liner pipe (1) is expanded against the bore of the host pipe (3), as shown in Figure 5, and then crosslinked by passing down the pipe water, water vapour or other fluid dosed with water.

## Claims

1. A method of lining pipes using a thermoplastic liner pipe incorporating a crosslinking agent, which method comprises deforming a round liner pipe having a diameter less than the internal diameter of the pipe which is to be lined into a geometrical shape having a substantially smaller overall dimension, inserting the deformed liner pipe into the existing pipe, reforming the liner pipe to a round shape having a diameter less than the internal diameter of the pipe, expanding the liner pipe onto the internal surface of the existing pipe, and crosslinking the liner pipe.

2. A method as claimed in Claim 1, wherein the material used for the liner is a crosslinkable polyolefin.

3. A method as claimed in Claim 2, wherein the material is crosslinkable polyethylene

4. A method as claimed in Claim 2 or Claim 3, wherein the material used for the liner is a polyolefin to which vinyl silane groups are grafted.

5. A method as claimed in any preceding claim, wherein the liner pipe is crosslinked by exposure to moisture.

## Patentansprüche

1. Verfahren zum Auskleiden von Rohrleitungen, das ein thermoplastisches Auskleidungsrohr benutzt, das ein Vernetzungsmittel umfasst, wobei das Verfahren aufweist, ein rundes Auskleidungsrohr mit einem Durchmesser geringer als der innere Durchmesser des auszukleidenden Rohrs in eine geometrische Gestalt mit einer im wesentlichen kleineren Gesamtbemesung zu verformen, das verformte Auskleidungsrohr in das vorhandene Rohr einzuschieben, das Auskleidungsrohr in eine runde Gestalt mit einem Durchmesser geringer als der innere Durchmesser des Rohrs zu reformieren, das Auskleidungsrohr auf die innere Oberfläche des vorhandenen Rohrs auszudehnen, und das Auskleidungsrohr zu vernetzen.

2. Verfahren nach Anspruch 1, in dem das für die Auskleidung benutzte Material ein vernetzbares Polyolefin ist.

3. Verfahren nach Anspruch 2, in dem das Material vernetzbares Polyethylen ist.

4. Verfahren nach Anspruch 2 oder Anspruch 3, in dem das für die Auskleidung benutzte Material ein Polyolefin ist, an das Vinylsilangrupen anpolymerisiert sind.

5. Verfahren nach einem vorhergehenden Anspruch, in dem das Auskleidungsrohr durch Aussetzung gegenüber Feuchtigkeit vernetzt wird.

## Revendications

1. Mode de garniture de conduits utilisant un tuyau thermoplastique de revêtement incorporant un agent de réticulation, ledit mode comportant la déformation d'un tuyau cylindrique de garniture ayant un diamètre inférieur au diamètre intérieur du conduit recevant la garniture en une forme géométrique ayant une cote hors-tout essentiellement inférieure, en introduisant le tuyau de garniture déformé dans le conduit actuel, en reformant le tuyau de garniture en forme cylindrique ayant un diamètre inférieur au diamètre intérieur du conduit, en gonflant le tuyau de garniture contre la surface intérieure du conduit actuel, et en effectuant ia réticulation du tuyau de garniture.

2. Mode tel que revendiqué à la revendication 1, selon lequel la matière servant de garniture est un polyoléfine admettant la réticulation.

3. Mode tel que revendiqué à la revendication 2, selon lequel la matière est un polyéthylène admettant la réticulation.

4. Mode tel que revendiqué à la revendication 2 ou la revendication 3, selon lesquelles la matière servant à la garniture de revêtement est un polyoléfine auquel des groupes de vinyle silane ont été greffés.

5. Mode tel que revendiqué en toute revendication précédente, selon laquelle la garniture de revêtement est réticulée suite à son exposition à l'humidité.
